# EUROPÄISCHE PATENTANMELDUNG

(11) **EP 1 079 647 A1**
(43) Veröffentlichungstag der Anmeldung: **28.02.2001**
(21) Anmeldenummer: 99810766.8
(22) Anmeldetag: 26.08.1999
(51) Int. Cl.: H04Q 7/34

(54) **Verfahren für eine maschinengestützte Analyse eines Mobilfunksystems**

(71) Anmelder: Ascom AG, 3000 Bern 14 (CH)
(72) Erfinder: Bobst Hanspeter, 4702 Oensingen (CH)
(74) Vertreter: Roshardt, Werner Alfred, Dipl.-Phys.

(57) **Zusammenfassung**

Ein Verfahren für eine maschinengestützte Analyse und Beurteilung eines Mobilfunksystems (1) durchsucht die im Rahmen einer Testphase ausgeführten Gesprächsverbindungen nach systeminternen und systemexternen Parameterwerten, die Fehlerzustände (z.B. Handover-Fehler) oder Systemleistungsschwächen (z.B. ungenügende Sprachqualität bei der Übertragung) anzeigen. In einem nächsten Schritt werden die Parameter nach wählbaren Gruppierungskriterien in mehreren Modulen (12.1 -12.3) ausgewertet, wobei pro Modul eine Mehrzahl von relevanten Ereignissen bzw. Ereignis-Sequenzen untersucht und ein Modul Quality Value (17.1 - 17.3) bezüglich einem bestimmten Beurteilungskriterium bestimmt wird. Der System Quality Value (20) des Gesamtsystems wird als gewichtete Summe aus den Qualitätswerten der einzelnen Module berechnet und kann als Vergleich unter den Gruppen bezüglich dem gewählten Gruppierungskriterium grafisch dargestellt werden.

## Beschreibung

### Technisches Gebiet

Die Erfindung betrifft ein Verfahren für eine maschinengestützte Analyse eines Mobilfunksystems, wobei zwischen zwei Endgeräten, insbesondere einem mobilen und einem ortsfesten oder mobilen, im Rahmen einer Testphase eine Vielzahl von Testverbindungen hergestellt und während der Testphase eine Mehrzahl von Protokollparameterwerten erfasst werden.

### Stand der Technik

Die Anbieter der mobilen Telekommunikation sind in zunehmendem Masse dem Wettbewerb ausgesetzt. Entsprechend besteht das Bedürfnis, die Qualität des eigenen Mobilfunksystems zu kontrollieren und wenn möglich zu verbessern. Einerseits geht es dabei darum, neue geografische Gebiete möglichst effizient (d.h. mit geringen Kosten aber flächendeckender Leistung) zu erschliessen, um so das Potential der Interessenten zu erhöhen. Andererseits sollen die bestehenden Kunden durch hohe Netzqualität erhalten werden.

Die Qualität des Mobilfunksystems bemisst sich aus der Sicht des Benutzers an der Übertragungsqualität der Sprache, an der Verfügbarkeit des Netzzugangs, an der Häufigkeit von Verbindungsunterbrüchen etc. D.h. der Benutzer will jederzeit telefonieren können und unabhängig vom Aufenthaltsort und der Gesprächsdauer eine gute und unterbruchsfreie Verbindung haben.

Mobilfunksysteme sind technisch sehr komplex. Die Performance hängt von z.T. schwer oder nicht berechenbaren, im Laufe der Zeit variierenden Randbedingungen ab. Zudem muss ein Mobilfunksystem ständig an die aktuellen Bedürfnisse angepasst werden (z.B. durch Integration weiterer Basisstationen). Es ist unumgänglich, Schritt für Schritt Fehler und Schwachstellen des Systems zu orten und die Ursachen zu eliminieren. Der Betreiber des Mobilfunksystems kann sich aber nicht auf die Rückmeldungen der Teilnehmer verlassen. Diese werden sich kaum die Mühe nehmen, den Systembetreiber konsequent auf mögliche Schwachstellen hinzuweisen. Selbst wenn solche Hinweise dem Betreiber mitgeteilt würden, wären sie höchstens ausnahmsweise geeignet, einen Systemfehler zu lokalisieren. Zu wenig wäre über den Systemzustand bekannt, welcher zum beanstandeten Fehler geführt haben könnte.

Die Systemanalyse bzw. -optimierung muss heutzutage von Experten in mühsamer Kleinarbeit durchgeführt werden. Die Schwierigkeit liegt darin, dass sich Fehler in der Systemprogrammierung, Fehlfunktionen der Hardware und konzeptionelle Fehler der Netzplanung in schwer vorhersehbarer Weise auf die subjektiv wahrgenommene Netzqualität auswirken.

Bei der bekannten manuellen Analyse werden viele Test-Verbindungen erstellt und qualitativ beurteilt. Um allfällige Störungen im System lokalisieren zu können, werden Protokolldaten aufgenommen und abgespeichert. Solche Testläufe werden meist periodisch durchgeführt. Die Testdauer kann beliebig gewählt werden und so muss nicht nur beim Sammeln der Testdaten, sondern auch bei der Auswertung der gesammelten Daten ein enormer Aufwand betrieben werden.

Wenn man bedenkt, dass pro Sekunde typischerweise deutlich über 100 Protokollwerte anfallen, dann wird klar, wie aufwendig es ist, alle diese Werte manuell zu überprüfen und mögliche Systemfehler (welche sich - wie bereits erwähnt - keineswegs direkt aus den Protokollwerten ergeben müssen) zu orten. Von einer systematischen Systemanalyse kann nicht die Rede sein.

In der WO 93/15591 ist ein Verfahren zum Planen eines zellulären Funknetzwerkes beschrieben. Die Planung erfolgt auf der Basis eines Modells der Funkumgebung und einer Simulation des Systems. Das Ziel der Simulation besteht darin, die für die nachfolgende Analyse erforderlichen Daten zu erzeugen. Die Optimierung der Systemparameter soll auch auf bestehende Systeme angewendet werden können, wobei dann die Parameter gemessen werden. Im Rahmen der Auswertung werden einzelne Parameter in Funktion anderer Parameter grafisch auf einem Bildschirm dargestellt.

### Darstellung der Erfindung

Aufgabe der Erfindung ist es, ein Verfahren der eingangs genannten Art anzugeben, das eine maschinengestützte Analyse und Beurteilung der Qualität eines Mobilfunksystems ermöglicht.

Die Lösung der Aufgabe ist durch die Merkmale des Anspruchs 1 definiert. Demzufolge umfasst das Verfahren folgende Schritte:
a) Zwischen zwei Endgeräten (insbesondere einem mobilen und einem ortsfesten oder zwei mobilen) werden im Rahmen einer Testphase - mit Hilfe einer Test- und Messvorrichtung - eine Vielzahl von Testverbindungen hergestellt. Eine Testverbindung gilt in diesem Zusammenhang nicht nur dann als hergestellt, wenn sie aufgebaut und wieder (ordnungsgemäss oder fehlerbedingt) abgebrochen wird, sondern auch dann, wenn sie trotz eines Versuchs nicht zustande kommt (quasi erfolglos ist).
b) Während der Testphase werden die Werte einer Mehrzahl von systeminternen und systemexternen Protokollparametern erfasst und aufgezeichnet. Beispielsweise werden bei der Datenerfassung die Parameterwerte der verschiedenen Systemeinheiten separat erfasst. Als Systemeinheiten sind funktionelle Einheiten (Hardware-Komponenten oder auch Programmeinheiten) des Mobilfunksystems und der Messvorrichtung zu verstehen (z.B. verschiedene Layer in den Endgeräten, Schaltungseinheiten und sonstige Komponenten der Basisstationen etc.).
c) Aus diesen Protokollparameterwerten werden Datensätze generiert, welche in einer Datenbank echtzeitmässig oder off-line abgespeichert werden. Die Datenbank hat eine geeignete Struktur, damit nach allen - im Sinne der nachfolgenden Verfahrensschritte - ausgewählten Protokollparameterwerten gesucht werden kann.
d) Die Auswertung der Protokollparameter erfolgt jeweils separat hinsichtlich einem bestimmten Beurteilungskriterium mit einem eigenen Modul, wobei die Anzahl derartiger Module grösser oder gleich eins und frei wählbar ist. Zumeist sind mehrere solcher Module vorgesehen. Solche Beurteilungskriterien können z.B. die Art des Verbindungsendes, die Sprachqualität oder der Abdeckungsgrad im Versorgungsgebiet sein. Die entsprechenden Auswertungsmodule für die erwähnten Beurteilungskriterien heissen dann z.B. "Call End Analysis", "Speech Quality Analysis" und "Coverage Analysis".
e) Jedes Modul berechnet einen Qualitätswert - den Modul Quality Value - des Mobilfunksystems. Dazu wird für eine Reihe von Ereignisarten, welche für dieses Beurteilungskriterium von Bedeutung sind, ein weiterer Qualitätswert - der Ereignis Quality Value - ermittelt. Die Anzahl der berücksichtigten Ereignisse pro Modul wie auch die Anzahl der pro Ereignis berücksichtigten Parameter ist zumindest eins, kann aber beliebig erweitert werden. Der Modul Quality Value wird dann als Mittelwert der verschiedenen Ereignis Quality Values berechnet.
f) Um einen Qualitätswert für das Gesamtsystem zu erhalten, wird aus den verschiedenen Modul Quality Values ein System Quality Value berechnet. Damit ist es möglich, das System einer genauen Analyse zu unterziehen um z.B. die Sprachqualität des Mobilfunksystems zu analysieren und zu beurteilen.

Der Kern der Erfindung liegt darin, dass systematisch die Qualität verschiedener Teile und Teilsysteme des Mobilfunksystems ermittelt wird. Systematisch bedeutet dabei, dass eine im voraus bestimmte Liste von zu prüfenden Parametern und Parameterfolgen vollständig abgearbeitet wird. Damit ist aber nicht nur die Qualität einzelner Parameterwerte, die nicht im vorgeschriebenen Intervall liegen und unter Umständen gar nicht zu einem Fehler führen, gemeint, sondern auch jene von ganzen Systemabläufen, Situationen oder Umständen, welche ein Fehlverhalten des Systems zur Folge haben können.

Der wesentliche Vorteil der Erfindung liegt in der Kombination von Systematik und Analysegeschwindigkeit. Aufgrund der enormen Datenmenge würden technische Experten nicht nur wochenlang suchen, sondern oft auch steckenbleiben, weil die Suchsystematik nicht bzw. nur mit unverhältnismässig grossem Aufwand gewährleistet werden kann.

Überdies werden bei der Erfindung, im Gegensatz zum Stand der Technik, nicht nur einzelne Parameterwerte auf Richtigkeit untersucht, sondern es lassen sich ganze Sequenzen und das Verhalten ganzer Systemteile oder -komponenten analysieren. Damit können Zusammenhänge besser erfasst und es kann rascher und gezielter eingegriffen werden. Die Systemanalyse ist modular aufgebaut, was das Verfahren äusserst flexibel macht und es erlaubt, das System bis in jedes Detail zu untersuchen und zu beurteilen. Falls gewünscht, kann anschliessend an die Analyse des Systems selbstverständlich auch eine automatische Fehlerkorrektur erfolgen.

Die systeminternen Protokollparameter bestehen vorwiegend aus Signalisierungs-Meldungen, die in den Endgeräten oder im Netzwerk auftreten (z.B. Daten, die von der vorhandenen Steuerungshardware bzw. -software des Systems während einer Verbindung generiert werden und zur Steuerung und Kontrolle der Kommunikationsverbindung dienen). Die systemexternen Protokollparameter sind vorwiegend Informationen, die typischerweise periodisch oder auch bei Bedarf mit separaten Mess- und Analyseverfahren bei den Endgeräten oder verteilt im Netz ermittelt werden (wie z.B. Daten zur Beurteilung der Verbindungsqualität, Randinformationsdaten über Ort, Zeit, Geschwindigkeit etc. des mobilen Endgeräts).

Jeder so ermittelte Datensatz wird mit einem Zeitstempel versehen und aufgrund eines (meist einem Protokollparameter zugeordneten) Gruppierungskriteriums einer bestimmten Gruppe von Daten zugeteilt. Ein Gruppierungskriterium kann z.B. die Basisstation, die geografische Position (z.B. auf 100 m), der Frequenz-Kanal oder auch der Netzbetreiber sein. Die Daten werden in einer Datenbank mit einer geeigneten Struktur abgespeichert.

Mit Hilfe des Zeitstempels der tatsächlichen Datenerfassung und vorzugsweise über einen weiteren Parameter, den Identifier der Verbindung, erfolgt eine Synchronisation der Daten bei der Eingabe in die Datenbank. (Der Identifier ist namentlich dann wichtig, wenn neben den Testverbindungen noch andere Benutzerverbindungen über eine bestimmte Einheit z.B. über eine Basisstation laufen.)

In einem Vorverarbeitungs-Schritt können die Datensätze, wo dies möglich ist, bereits nach einem gewünschten Gruppierungskriterium gruppiert werden, damit sie später besser bzw. schneller verarbeitet werden können. Gleichzeitig kann auch eine Datenreduktion erfolgen.

Zunächst wird aus den in der Datenbank abgespeicherten Datensätzen mindestens eine Ereignis-Tabelle pro Modul erstellt, indem in der Datenbank nach vorgegebenen Protokollparameterwerten oder nach bestimmten Kombinationen von Protokollparameterwerten, welche ein vordefiniertes Ereignis signalisieren, gesucht wird. Die entsprechenden Datensätze (bzw. die darin enthaltenen Protokollparameter) werden anschliessend ganz oder teilweise in den Ereignis-Tabellen abgespeichert.

Für jedes so gefundene Ereignis wird der genaue Zeitpunkt bestimmt, an dem es stattgefunden hat. Danach wird vor resp. nach dem Ereignis eine wählbare oder vordefinierte Vor- und/oder Nachlaufzeit ermittelt, die jene Zeitspanne kennzeichnet, innerhalb welcher andere relevante Ereignisse liegen, die das gefundene Ereignis beeinflussen oder von ihm beeinflusst werden können.

Die relevanten Daten innerhalb dieser Vor- bzw. Nachlaufzeit liegenden relevanten Ereignisse werden ebenfalls aus der Datenbank herausgesucht und gemeinsam mit den Daten der gefundenen Ereignisse in der Ereignis-Tabelle eingetragen. Anhand dieser Daten wird jedes gefundene Ereignis klassiert. Die Klassierung der Ereignisse wird vorgenommen, weil ein Ereignis X, dem z.B. das Ereignis A vorausgeht, "normal" ist, wohingegen das Ereignis X, dem das Ereignis B vorausgeht, einen Fehler kennzeichnet und demzufolge anders verarbeitet werden muss.

Nachdem die Ereignisse den jeweiligen Klassen zugeordnet worden sind, wird für jede mögliche bzw. im Beobachtungszeitraum aufgetretene Ereignisart ein Qualitätswert - der Ereignis Quality Value - rmittelt.
a) Dazu wird zunächst jeder möglichen Signalisierungs-Meldung bzw. -Sequenz ein Zahlenwert zugeordnet. Dieses Mapping der Meldungen in den Zahlenbereich erfolgt, um eine Möglichkeit zur quantitativen Beurteilung der Umstände vor und nach einem bestimmten Ereignis zu bekommen.
b) Danach wird aus den Datensätzen aller gleichklassierten Ereignisse sowie aus diesen Zahlenwerten ein Durchschnittsdatensatz berechnet, indem jeweils der Mittelwert der gleichen Protokollparameter jedes Datensatzes resp. der Zahlenwerte für die Signalisierungs-Sequenzen gebildet wird.
c) Mit diesen Mittelwerten als Komponenten wird für jede mögliche Ereignisart (falls zumindest ein Ereignis dieser Art eingetreten ist) ein Ereignisvektor gebildet.
d) Der Ereignis Quality Value wird jetzt ermittelt, indem der Ereignisvektor einer bestimmten Ereignisart mit einem der Ereignisart entsprechenden, d.h. ereignisspezifischen Gewichtungsvektor skalar multipliziert wird. Dieser Gewichtungsvektor ist nötig, da nicht alle Protokollparameter des Ereignisvektors den gleich starken Einfluss bzw. die gleich hohe Bedeutung für diese Ereignisart haben. Die Summe der Gewichtungsfaktoren der einzelnen Ereignis-Gewichtungsvektoren ist vorzugsweise gleich eins, damit gleichzeitig auch eine gewisse Normierung erreicht werden kann.

Aus den einzelnen Modul Quality Values wird schliesslich noch ein System Quality Value bezüglich einem wählbaren Gruppierungskriterium berechnet. Dazu wird ein Quality Vektor gebildet, dessen Komponenten die Modul Quality Values der einzelnen Module sind. Der System Quality Value wird nun berechnet als Skalarprodukt dieses Vektors mit einem Modul-Gewichtungsvektor, welcher die einzelnen Module je nach gewähltem Gruppierungskriterium gewichtet. Die Summe der Komponenten des Modul-Gewichtungsvektor ist eins, womit sich gleichzeitig eine Normierung des System Quality Values erreichen lässt. Damit ergibt sich ein System Quality Value für jeden möglichen Wert des Gruppierungskriteriums, z.B. genau ein System Quality Value für jede Basisstation, jede geografische Position, jeden Frequenz-Kanal oder jeden Netzbetreiber.

Durch geeignete Wahl der ereignisspezifischen und der Modul-Gewichtungsvektoren ist es somit möglich, eine beliebig genaue, flexible und detailgetreue Auswertung der erfassten Daten vorzunehmen. Es können z.B. die Sprachqualitäten der Verbindungen einer bestimmten Basisstation in Abhängigkeit der Endgerät-Position oder in Abhängigkeit des benutzten Frequenzkanals analysiert werden.

Die so berechneten System Quality Values können nach der maschinengestützten Analyse des Mobilfunksystems auch der Beurteilung dieses Systems durch einen System-Betreuer dienen. Um die Beurteilung möglichst einfach durchführen zu können, werden diese Werte bevorzugt grafisch, beispielsweise als Histogramm, dargestellt. In einem Diagramm werden auf der x-Achse die möglichen Elemente des gewählten Gruppierungskriteriums (z.B. alle Basisstationen) und auf der y-Achse die entsprechenden System Quality Values aufgetragen. Dabei können die Elemente beliebig sortiert werden nach Quality Value oder, beispielsweise im Fall der Frequenz-Kanäle, einfach in aufsteigender oder absteigender Reihenfolge der Kanal-Nummer. Aber auch Diagramme mit mehr als zwei Dimensionen können vorteilhaft sein. Beispielsweise ein drei-dimensionales Diagramm bei der Beurteilung der Qualität hinsichtlich der geografischen Position als Gruppierungskriterium. Anstatt die einzelnen Messpositionen auf einer einzigen Achse (z.B. mit Hilfe einer Nummer) darzustellen, werden einfach zwei der drei Dimensionen des Diagramms zur positionsgetreuen Darstellung der Messpositionen benutzt. Die System Quality Values werden dann in der dritten Dimension dargestellt, was auf einfache Art und Weise einen räumlichen Eindruck der System-Qualität im Versorgungsgebiet vermittelt.

Um eine genauere Systemanalyse vornehmen zu können, werden die System Quality Values bezüglich verschiedener Gruppierungskriterien zueinander in Bezug gesetzt. Dazu können z.B. die gleichen Ereignisse einer bestimmten Klasse nach unterschiedlichen Gruppierungskriterien gruppiert und anschliessend erfindungsgemäss ausgewertet werden.

Als systemexterne Parameter werden vorzugsweise die Sprachqualität, die Dauer zur Erstellung der Verbindung, Ort, Zeit, Geschwindigkeit und Fahrtrichtung der Mobilstation erfasst. Die Beurteilung der Sprachqualität kann dadurch erfolgen, dass ein vorgegebenes Sprachsignal (z.B. ein in verschiedenen Sprachen und/oder mit verschiedenen Stimmen gesprochener Satz) übertragen wird, und empfangsseitig eine Analyse mit Hilfe eines neuronalen Netzwerkes erfolgt (vgl. z.B. EP-0 644 674 A2).

Die Durchführung des erfindungsgemässen Verfahrens in einem realen Umfeld erfolgt mit einer Analyseanordnung in einem konventionellen Mobilfunksystem. Dieses umfasst ein öffentliches Mobilfunknetzwerk sowie eine Mehrzahl von Endgeräten, zwischen denen sowohl normale Telefonverbindungen als auch Testverbindungen aufgebaut und wieder beendet werden können. Weiter ist zumindest eine Messvorrichtung vorgesehen, mit welcher die gewünschten Protokollparameter durch Messen oder durch Aufzeichnung von Systemmeldungen erfasst werden können, wobei typischerweise mehrere solcher Messvorrichtungen vorhanden sind. Die erfassten Parameter werden an eine Auswertungsvorrichtung, welche eine spezifisch strukturierte Datenbank und eine Auswertungseinheit umfasst, weitergegeben. Die Parameter werden in der Datenbank in geeigneter Weise abgespeichert und danach durch die Auswertungseinheit nach dem erfindungsgemässen Verfahren mit einer Mehrzahl von Modulen analysiert und daraus ein System Quality Value berechnet. Der Zeitpunkt der Übermittlung der erfassten Daten von den Messvorrichtungen an die Auswertungsvorrichtung, sowie der Auswertung der abgespeicherten Daten, ist frei. Beides kann sowohl echtzeitmässig, als auch off-line zu einem späteren Zeitpunkt erfolgen.

Erfindungsgemäss kann die Auswertung der erfassten Daten auch getrennt von der Datenerfassung erfolgen. Dazu wird eine Auswertungsvorrichtung verwendet, mit welcher zuvor erfasste Daten importiert werden können. Solche Daten umfassen z.B. extern erfasste Daten, d.h. anderweitig gemessene und aufgezeichnete, systeminterne und/oder systemexterne Protokollparameter eines beliebigen Mobilfunksystems. Diese Daten sind bereits als Datensätze ausgewählter Protokollparameter vorhanden oder die Datensätze werden von der Auswertungsvorrichtung gebildet und in einer geeignet strukturierten Datenbank abgespeichert. Die Auswertung der in der Datenbank abgespeicherten Datensätze geschieht erfindungsgemäss wie bereits beschrieben.

Um die Analyse des Mobilfunksystems immer präziser durchführen zu können, können bei Bedarf zusätzliche Parameter erfasst und/oder abgespeichert, neue Gruppierungskriterien, Ereignisse oder Ereignisklassen definiert, andere Vor- bzw. Nachlaufzeiten spezifiziert, andere Ereignisvektoren gebildet, die ereignisspezifischen und/oder die Modul-Gewichtungsvektoren verändert oder zusätzliche resp. andere Auswertungs-Grafiken erstellt werden. Die Leistungsfähigkeit des erfindungsgemässen Verfahrens kann mit der Zeit also weiter erhöht werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Darstellung eines Mobilfunksystems und einer Anordnung zur Überprüfung desselben;
- Fig. 2: ein Blockschaltbild zur Erläuterung des erfindungsgemässen Verfahrens;
- Fig. 3: eine schematische, grafische Darstellung einer möglichen Systemanalyse;
- Fig. 4: eine schematische, grafische Darstellung einer weiteren Systemanalyse.

Grundsätzlich sind in den Figuren gleiche Teile mit gleichen Bezugszeichen versehen.

### Wege zur Ausführung der Erfindung

Das im folgenden beschriebene Ausführungsbeispiel kann als ein mehrstufiges Verfahren verstanden werden:

Vorab werden die Testverbindungen durchgeführt und die Protokollparameter erfasst. Zudem werden die Daten in eine relationale Datenbank eingegeben und in einem Vorverarbeitungsschritt nach diversen Gruppierungskriterien gruppiert.

In einem ersten Schritt werden aus den Daten die interessierenden Ereignisse herausgesucht, anhand der jeweiligen Vor- und Nachgeschichte klassifiziert und je nach gewünschter Auswertung bewertet. Dabei werden die Ereignisse in mehreren Modulen verarbeitet, welche jeweils die Systemqualität bezüglich einem bestimmten Kriterium bestimmen.

In einem zweiten Schritt wird aus den pro Modul bewerteten Ereignissen ein Modul-Qualitätswert berechnet, der die Systemqualität bezüglich dem entsprechenden Kriterium wiedergibt.

In einem dritten Schritt wird aus den Modul-Qualitätswerten ein Mass für die gesamte Systemqualität hinsichtlich dem gewählten Gruppierungskriterium ermittelt.

In weiteren Schritten erfolgt eine Auswertung der Systemanalyse bezüglich dem gewählten Gruppierungskriterium, indem die Systemqualität der entsprechenden Gruppen grafisch dargestellt und so auf einfache Weise miteinander verglichen werden kann.

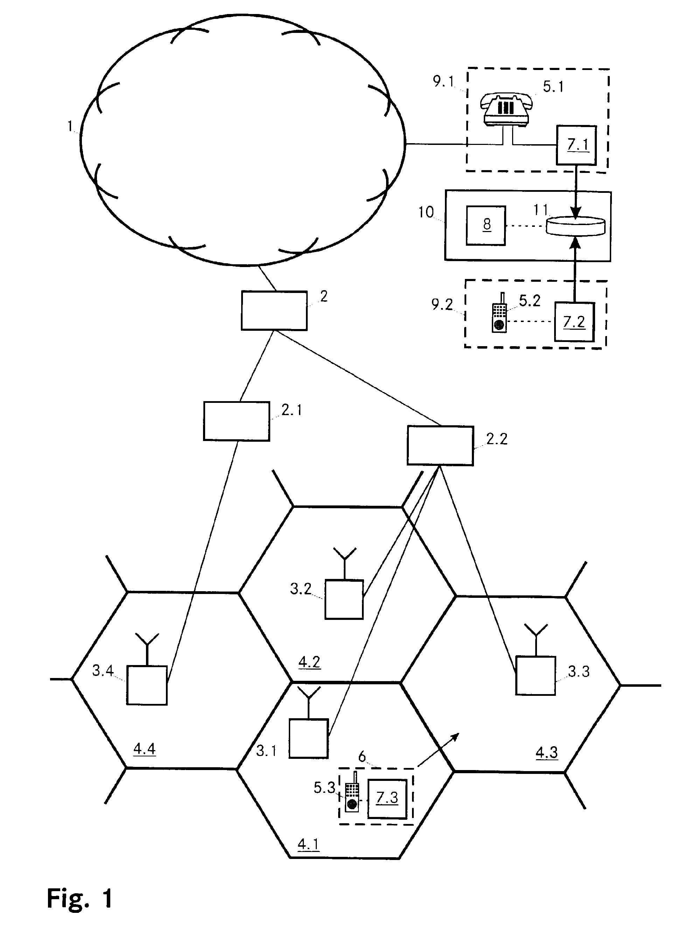

Das Objekt der erfindungsgemässen maschinengestützten Analyse ist ein Mobilfunksystem von an sich bekannter Bauart. In Fig. 1 sind symbolisch eine Zentrale 2 (MSC, Mobile Switching Center) und vier Basisstationen 3.1 bis 3.4 (Antennen) dargestellt. Die Basisstationen 3.1 bis 3.4 werden z.B. durch zwei Controller 2.1, 2.2 (BSC, Base Station Controller) angesteuert und versorgen die Zellen 4.1 bis 4.4. Das Mobilfunksystem ist z.B. mit einem öffentlichen Netzwerk 1 (PSTN) verbunden. Zwischen einem ortsfesten Endgerät 5.1 bzw. einem mobilen Endgerät 5.2 und einer Mobilstation 6 können also in üblicher Weise Gespräche geführt werden.

In der Regel ist es sehr schwierig, die Qualität eines Mobilfunksystems systematisch zu messen bzw. zu beurteilen. Dadurch dass sich die Mobilstation ständig bewegt, ändert sich auch der Zustand des Mobilfunksystems. Dies allerdings nicht kontinuierlich sondern z.T. abrupt (z.B. bei einem Handover infolge eines Wechsels zu einer anderen Basisstation).

Es sind bereits spezifische Messvorrichtungen auf dem Markt erhältlich, welche es erlauben, automatisch Gesprächsverbindungen zu erstellen und die Verbindungsqualität zu messen (vgl. z.B. Ascom Infrasys AG, CH-4503 Solothurn, Schweiz, "ascom QVoice, The Most Advanced Cellular Network Quality Measurement System"). Diese bekannten Messsysteme erfassen zwar eine grosse Menge von Daten, stellen dem Betreiber jedoch keine Möglichkeit zur automatischen Analyse und Qualitätsbewertung zur Verfügung.

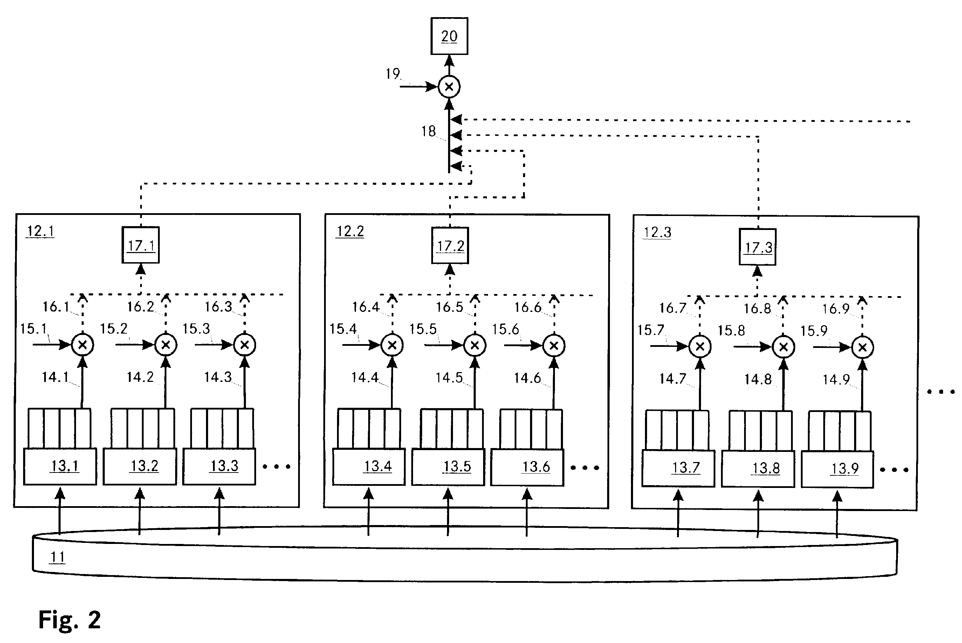

Das erfindungsgemässe Verfahren geht hier einen Schritt weiter. Anhand der Fig. 1 und 2 sollen die wesentlichen Schritte näher erläutert werden.

Im Rahmen einer Testphase werden zwischen einer stationären Einheit 9.1 (welche eine erste Messvorrichtung 7.1 und eine konventionelle Schaltung eines Endgerätes 5.1 umfasst) und einer Mobilstation 6 (welche eine zweite Messvorrichtung 7.3 mit einer Mobilfunktelefonschaltung 5.3 beinhaltet) oder zwischen einer mobilen Einheit 9.2 (welche eine dritte Messvorrichtung 7.2 und eine konventionelle Schaltung eines mobilen Endgerätes 5.2 umfasst) und der Mobilstation 6 nacheinander und wechselseitig eine grosse Anzahl von Testverbindungen aufgebaut. Konkret heisst das, dass z.B. von der Mobilstation 6 die Nummer des Endgerätes 5.1 oder 5.2 gewählt wird, dass geprüft wird, ob und nach welcher Zeit die Verbindung zustande gekommen ist, dass die Sprachqualität gemessen wird und dass schliesslich die Verbindung ordnungsgemäss beendet wird. Das Prozedere wird auch in umgekehrter Richtung, d.h. von der Einheit 9.1 oder der Einheit 9.2 zur Mobilstation 6 durchgeführt. Vorzugsweise werden durch die Messvorrichtungen 7.1 bis 7.3 z.B. mehrere hundert Verbindungen erstellt, beendet und vermessen. Währenddessen wird die Mobilstation kreuz und quer durch das zu prüfende Gebiet des Mobilfunksystems gefahren.

Jede dieser Verbindungen wird protokolliert. D.h. es werden einerseits möglichst alle internen Zustände des Mobilfunksystems abgespeichert und andererseits auch diverse systemexterne Parameter erfasst. Die Zustände des Mobilfunksystems sind durch systeminterne Protokollparameter bestimmt. Diese Parameter sind in jedem Mobilfunksystem vorhanden (vgl. GSM Recommendation 04.08). Beispiele dafür sind:
- Funkkanalparameter (Frequenz, Signalpegel etc.)
- Call-control-Parameter
- Mobility-Management-Parameter (Routing, Handover-Parameter etc.)

Es werden nicht nur die in den Endgeräten auftretenden Protokollparameter (z.B. GSM-Protokolle von verschiedenen Layern) erfasst, sondern auch die innerhalb des Systems generierten, z.B. die Protokolle, welche in den Basisstationen bzw. Controllern ablaufen.

Als systemexterne Protokollparameter werden solche bezeichnet, die nicht vom Mobilfunksystem selbst generiert werden wie z.B.:
- Koordinationsparameter (Ort, Zeit, Geschwindigkeit, Richtung etc. der Mobilstation),
- Qualitätsparameter (Dauer des Verbindungsaufbaus, nicht erfolgreicher Verbindungsaufbau, Qualität der übertragenen Sprachsignale während der Verbindung, besondere Störungen etc.),
- Steuerungsinformationen (z.B. Zeitpunkt des Signals, welches das Endgerät veranlasst, eine bestimmte Verbindung zu wählen).

Zu beachten ist, dass Protokollparameter stets auf einen momentanen Betriebszustand bezogen sind. Sie können ihre Werte z.T. während eines Gesprächs oder von einem Gespräch zum anderen ändern.

Aus den genannten Protokollparametern werden auf die einzelnen funktionellen Einheiten bezogene Datensätze generiert und mit einem Zeitstempel versehen. Während der Testphase können die Datensätze in der Reihenfolge der Generierung z.B. vor Ort abgespeichert werden. Es ist aber auch möglich, die Datensätze unverzüglich zu einer Verarbeitungsstation 10 zu übertragen. Dort werden sie in eine Datenbank 11 eingegeben, wobei sie zueinander in Beziehung gesetzt werden. Dazu werden in einem Vorverarbeitungs-schritt verschiedene Tabellen generiert, welche die Datenblöcke bzw. Datensätze nach vorgegebenen Gruppierungskriterien auflisten. So können die Datensätze z.B. in chronologischer Reihenfolge aufgelistet werden (mit zusätzlicher Angabe des Typs der Daten, der Identifikationsnummer der Verbindung etc.). Mit Vorteil werden mehrere Listen entsprechend den später anzuwendenden Suchfunktionen bereitgestellt. Beispielsweise können die Datenblöcke nach dem geografischen Aufenthaltsbereich der Mobilstation sortiert werden.

Als nächstes werden die in der Datenbank 11 gespeicherten Parameterwerte in der Verarbeitungseinheit 8 verarbeitet und analysiert. Dies geschieht in verschiedenen Modulen 12.1 bis 12.3. Jedes Modul 12.1 bis 12.3 wertet die Daten im Hinblick auf ein bestimmtes Beurteilungskriterium aus. Beispiele dafür sind:
■ Call End,
■ Speech Quality,
■ Coverage,
■ Timing,
■ Handover,
■ Data Service.

Dazu werden eine Mehrzahl von Ereignis-Tabellen 13.1 bis 13.9 generiert, indem in den vorsortierten Listen nach bestimmten, für das jeweilige Beurteilungskriterium relevanten Ereignissen gesucht wird. Diese Ereignisse werden identifiziert, indem nach bestimmten einzelnen oder bestimmten Kombinationen von Protokollparameterwerten gesucht und die entsprechenden Datensätze in den Ereignis-Tabellen 13.1 bis 13.9 abgespeichert werden.

Ein solches Ereignis ist z.B. ein Verbindungsabbau, egal ob regulär oder vorzeitig. Ein Verbindungsabbau kann z.B. mit Hilfe der systeminternen Protokollparameter erfasst werden. Es gibt im Mobilfunksystem Flags, welche diesbezüglich aussagekräftig sind. Es gibt aber auch systemexterne Protokollparameter, welche einen Verbindungsabbau erkennen lassen (z.B. entsprechende bzw. fehlende Antwortsignale der anderen Teilnehmerstation).

Als Ereignis kann z.B. auch ein Handover bezeichnet werden.

Bei der kombinierten Suche werden meist ungewöhnliche Parameterwert-Kombinationen gesucht, welche auf eine Systemleistungsschwäche hinweisen können (z.B. ein hoher Signalpegel in Kombination mit einer hohen Bitfehlerrate).

Im nächsten Schritt wird zu jedem gefundenen Ereignis der genaue Zeitpunkt bestimmt, an dem es stattgefunden hat. Danach wird innerhalb einer bestimmten Vor- und Nachlaufzeit nach weiteren Ereignissen gesucht, welche für das gefundene Ereignis von Bedeutung sein, dieses z.B. beeinflussen oder von diesem beeinflusst werden können. Auch von diesen Ereignissen werden relevante Daten in den Ereignis-Tabellen 13.1 bis 13.9 abgespeichert.

Anhand der abgespeicherten Daten, z.B. anhand der Reihenfolge und der Parameterwerte der Ereignisse innerhalb der Vor- und Nachlaufzeit eines bestimmten Ereignisses, wird dieses anschliessend klassifiziert, d.h. einer von mehreren möglichen Ereignisarten zugeordnet. So erhält man eine Reihe von Ereignisarten, welche im Beobachtungsintervall jeweils mehr oder weniger oft eingetreten sind.

Hinsichtlich dem gewählten resp. auszuwertenden Gruppierungskriterium gibt es für jede dieser Ereignisarten eine bestimmte Auswahl von relevanten Protokollparametern und einen bestimmten Ereignis-Gewichtungsvektor 15.1 bis 15.9, mit dem den einzelnen Parameterwerten eine mehr oder weniger grosse Bedeutung gegeben werden kann.

Von jedem Protokollparameter dieser Auswahl wird nun der Mittelwert gebildet, so dass am Schluss genau ein Durchschnittsdatensatz 14.1 bis 14.9 pro Ereignisart resultiert. Jeder Wert dieses Durchschnittsdatensatzes 14.1 bis 14.9 ist also gleich dem Durchschnitt aller entsprechenden Werte der Ereignis-Datensätze einer bestimmten Ereignisart.

Die weitere Verarbeitung in den einzelnen Modulen 12.1 bis 12.3 erfolgt, indem aus den Durchschnittsdatensätzen 14.1 bis 14.9 ein Vektor gebildet und mit dem entsprechenden Ereignis-Gewichtungsvektor 15.1 bis 15.9 skalar multipliziert wird. Das Resultat ist je ein Ereignis Quality Value 16.1 bis 16.9 pro untersuchte Ereignisart.

Um schliesslich den Modul Quality Value 17.1 bis 17.3 der einzelnen Module zu bestimmen, wird einfach der Mittelwert aller in diesem Modul berechneten Ereignis Quality Values 16.1 bis 16.3 für das Modul 12.1, 16.4 bis 16.6 für das Modul 12.2 und 16.7 bis 16.9 für das Modul 12.3 berechnet.

Zuletzt folgt die Berechnung des System Quality Values 20. Dazu wird aus den einzelnen Modul Quality Values 17.1 bis 17.3 ein Modul Quality Vektor 18 gebildet, welcher anschliessend mit einem Modul-Gewichtungsvektor 19 skalar mulitpliziert wird.

Anstatt die Durchschnittsdatensätze 14.1 bis 14.9 bzw. die Modul Quality Values 17.1 bis 17.3 jeweils als Mittelwerte der einzelnen Ereignis-Datensätze resp. der Ereignis Quality Values 16.1 bis 16.9 zu berechnen, könnten diese natürlich auch (ähnlich dem Skalarprodukt bei der Berechnung der Ereignis Quality Values 16.1 bis 16.9 und des System Quality Values 20) als gewichtete Summe berechnet werden, wobei auch die Summe der jeweiligen Gewichtungsfaktoren jeweils gleich eins gewählt werden könnte.

Im folgenden sollen stark vereinfachte Beispiele die obigen allgemeinen Ausführungen veranschaulichen. Es wird jeweils davon ausgegangen, dass die Phase der Datenerfassung und die Vorverarbeitung bereits abgeschlossen ist. Die Daten müssen also in gewünschter Weise analysiert und dargestellt werden, dass sie ein Systembetreuer auf einfache Art und Weise interpretieren kann. Zudem soll er seine Analysen beliebig verfeinern können, bis er die gewünschte Detailtiefe erreicht hat.

Die Analyse des Mobilfunksystems erfolgt automatisch, nachdem der Systembetreuer dem System mitgeteilt hat (z.B. durch Auswahl eines Menupunktes auf einem Computer-Bildschirm), welche Auswertung, d.h. welche Quality Values bezüglich welchen Gruppierungskriterien und mit welchen Gewichtungsvektoren er gerne sehen würde. Das System bestimmt zunächst die der Auswertung entsprechenden Gewichtungsfaktoren, führt die Analyse danach automatisch durch und stellt die gewünschte Auswertung grafisch auf dem Bildschirm dar.

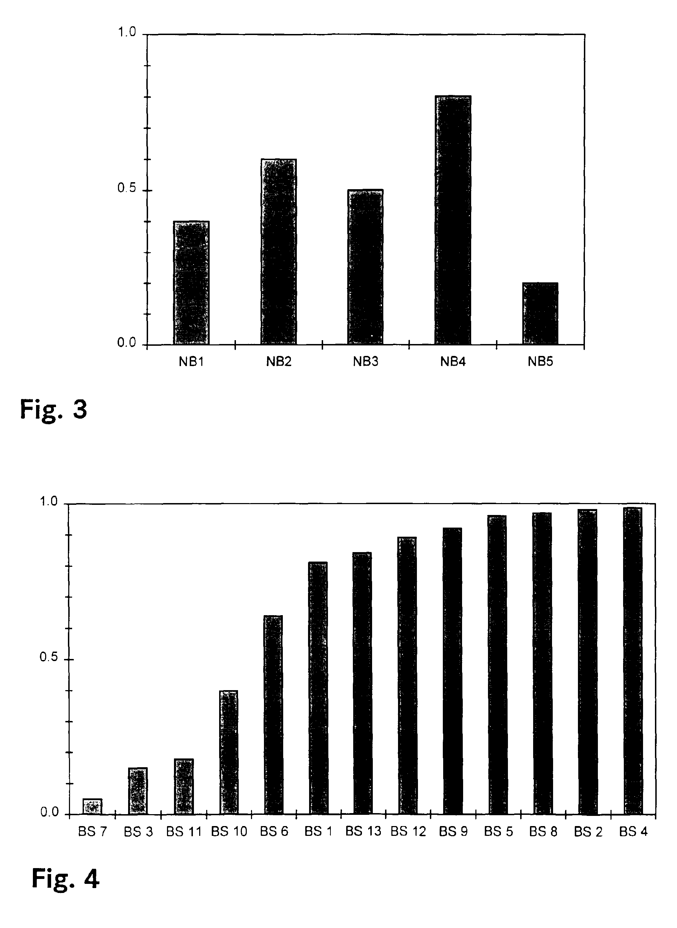

Fig. 3 zeigt z.B. eine (hypothetisch angenommene) Häufigkeitsverteilung der System Quality Values bezüglich dem Gruppierungskriterium Netzbetreiber. Für jeden Netzbetreiber NB1 bis NB5 ist eine Säule dargestellt, deren Höhe dem System Quality Value dieses Netzbetreibers NB1 bis NB5 entspricht. Die Werte sind nach der Nummer des Netzbetreibers NB1 bis NB5 geordnet.

Es ist zu beachten, dass die dargestellte Häufigkeitsverteilung nur eine von einer riesigen Zahl von möglichen Häufigkeitsverteilungen bezüglich diesem Gruppierungskriterium ist. Je nach Wahl der Gewichtungsfaktoren der Ereignis-Gewichtungsvektoren oder des Modul-Gewichtungsvektors können sehr detaillierte Informationen aus der Datenbank 11 extrahiert werden. Im folgenden werden dafür drei Beispiele gegeben. Bei jedem Beispiel werden die Daten vom ersten Modul 12.1 bezüglich dem Beurteilungskriterium Call End, vom zweiten Modul 12.2 bezüglich der Speech Quality und vom dritten Modul 12.3 bezüglich dem Coverage ausgewertet. Die berücksichtigten Protokollparameter und deren Sequenzen bezüglich dem Call End seien z.B. Signalpegel, Bitfehlerrate, Funkkanal und Handover.

Erstes Beispiel: Sowohl die Gewichte der Ereignis-Gewichtungsvektoren 15.1 bis 15.9 als auch jene des Modul-Gewichtungsvektors 19 sind alle grösser als Null. Die Häufigkeitsverteilung von Fig. 3 zeigt in diesem Fall einen Vergleich der Qualitäten der gesamten Mobilfunksysteme der einzelnen Netzbetreiber NB1 bis NB5.

Zweites Beispiel: Die Gewichte der Ereignis-Gewichtungsvektoren 15.1 bis 15.9 sind alle grösser als Null, aber die Gewichte des Modul-Gewichtungsvektors 19 sind alle Null ausser jenem für das Call End Modul 12.1. Die Häufigkeitsverteilung von Fig. 3 zeigt in diesem Fall einen Gesamtvergleich der Qualitäten aller Verbindungsabbrüche der einzelnen Netzbetreiber NB1 bis NB5.

Drittes Beispiel: Alle Gewichte der Ereignis-Gewichtungsvektoren 15.1 bis 15.9 ausser jenem für den Signalpegel sind gleich Null. Auch alle Gewichte ausser jenem für das Call End Modul 12.1 des Modul-Gewichtungsvektors 19 sind gleich Null. Die Häufigkeitsverteilung von Fig. 3 zeigt in diesem Fall einen detaillierten Vergleich der Qualität aller Verbindungsabbrüche der einzelnen Netzbetreiber NB1 bis NB5, die auf einen zu tiefen Signalpegel zurückzuführen sind.

Es ist klar, dass durch die Fülle an erdenklichen Gewichtungsvektoren eine immense Menge an Auswertungen möglich sind. Es ist daher auch möglich, die Beurteilung eines Mobilfunksystems automatisch durch eine (nicht gezeigte) Auswerteeinheit durchführen zu lassen, und diese nicht anhand der grafischen Darstellungen einem Systembetreuer zu überlassen. Die Auswerteeinheit kann z.B. Korrekturmeldungen an die betroffenen funktionellen Einheiten senden oder dem Systembetreuer eine Liste von gefundenen Fehlern über eine Ausgabeeinheit anzeigen. Dieser kann dann die erforderlichen Massnahmen treffen (z.B. das Ersetzen einer defekten Steuerschaltung oder die Ladung von fehlerfreien Konfigurationsdaten bzw. eines fehlerfreien Programms). Es ist auch möglich, dass der System-betreuer bei der Analyse zunächst selbständig vorgeht und bei der Verfeinerung bzw. Fehlereingrenzung durch das System unterstützt wird.

Fig. 4 zeigt eine andere (ebenfalls hypothetisch angenommene) Häufigkeitsverteilung der System Quality Values bezüglich dem Gruppierungskriterium Basisstation. Für jede Basisstation BS1 bis BS13 ist eine Säule dargestellt, deren Höhe dem System Quality Value dieser Basisstation BS1 bis BS13 entspricht. Die Werte sind jedoch nicht nach der Nummer der Basisstation BS1 bis BS13, sondern nach dem jeweiligen System Quality Wert geordnet. Dadurch kann auf einen Blick festgestellt werden, was für eine Verteilung die Qualitätswerte, welche der gewünschten Auswertung entsprechen, aufweisen, wie das allgemeine Qualitäts-Niveau aussieht und wo dringend Verbesserungen notwendig sind.

Auch hier aber gilt, dass die dargestellte nur eine Möglichkeit einer riesigen Auswahl von Häufigkeitsverteilungen ist, die entsprechend den gewählten Gewichtungsvektoren möglich ist.

Es wurden bewusst sehr einfache Beispiele gewählt. Es ist aber leicht erkennbar, dass sich das Verfahren ganz allgemein zu einer beliebig detaillierten Analyse und Beurteilung eines Mobilfunksystems und damit zur Aufdeckung von Störungsursachen bzw. zur maschinengestützten Lokalisierung von Systemmängeln eignet.

Zusammenfassend ist festzustellen, dass es mit dem erfindungsgemässen Verfahren sowie der entsprechenden Anordnung möglich ist, ein Mobilfunksystem zu analysieren und dessen Qualität zu beurteilen, damit diese gezielt verbessert werden kann.

Die Vorteile der Erfindung sind folgende:
- Grundsätzlich ist das Verfahren programmier- und erweiterbar. Es kann mit zunehmendem Wissensstand des Systemanbieters wachsen. Auch neue Erkenntnisse des Netzbetreibers können eingebracht werden.
- Die Systemanalyse und eine eventuelle nachfolgende Fehlersuche und Ursachenbehebung ist sehr schnell. Pro Stunde Messfahrt liegt die Analysezeit im Bereich von Sekunden (und nicht von Stunden).
- Es kann die Qualität eines gesamten Systems oder eines beliebigen Teiles davon beurteilt werden.
- Es können aber auch einzelne Probleme in einzelnen Verbindungen gefunden werden, auch wenn die Datenmenge sehr gross und die Fehlerquote des Systems sehr klein ist.
- Alle den Experten bekannten Probleme werden schnell identifiziert. Neue, bisher noch nie aufgetretene Probleme können erkannt und von Hand gezielt untersucht werden.

## Patentansprüche

1. Verfahren für eine maschinengestützte Analyse eines Mobilfunksystems, wobei:
a) zwischen zwei Endgeräten, insbesondere einem mobilen und einem ortsfesten oder mobilen, im Rahmen einer Testphase eine Vielzahl von Testverbindungen hergestellt und
b) während der Testphase eine Mehrzahl von Protokollparameterwerten erfasst werden,
dadurch gekennzeichnet, dass
c) ausgewählte Protokollparameterwerte als Datensatz in einer Datenbank mit geeigneter Struktur abgespeichert werden,
d) eine Auswertung der abgespeicherten Protokollparameterwerte mit einer Mehrzahl von Modulen erfolgt, wobei ein Modul zur Auswertung der Protokollparameterwerte bezüglich einem Beurteilungskriterium dient,
e) pro Modul ein Modul Quality Value als Mittelwert einer Mehrzahl von Ereignis Quality Values berechnet wird, wobei die Ereignis Quality Values ein Qualitäts-Mass für je einen bestimmten Ereignistyp darstellen,
f) zur Analyse des Mobilfunksystems aus den Modul Quality Values ein System Quality Value berechnet wird.

2. Verfahren nach Anspruch 1, dadurch gekennzeichnet, dass die erfassten Protokollparameter systeminterne und/oder systemexterne Protokollparameter umfassen, wobei Signalisierungs-Meldungen als systeminterne Protokollparameter und von aussen gemessene Werte als systemexterne Protokollparameter gelten.

3. Verfahren nach Anspruch 1 oder 2, dadurch gekennzeichnet, dass ein Datensatz mit einem Zeitstempel versehen und gemäss einem vorgegebenen Gruppierungskriterium einer entsprechenden Gruppe von Datensätzen zugeordnet wird.

4. Verfahren nach einem der Ansprüche 1 bis 3, dadurch gekennzeichnet, dass pro Modul zumindest eine Ereignis-Tabelle erstellt wird, indem in der Datenbank nach vorgegebenen, ein bestimmtes Ereignis kennzeichnenden Protokollparameterwerten oder Protokollparameterwert-Kombinationen gesucht wird und die entsprechenden Datensätze ganz oder teilweise in den Ereignis-Tabellen abgespeichert werden.

5. Verfahren nach Anspruch 4, dadurch gekennzeichnet, dass zu jedem gefundenen Ereignis der Zeitpunkt und eine wählbare oder vordefinierte Vor- und/oder Nachlaufzeit ermittelt wird und für diese Ereignisse relevante Daten anderer, innerhalb der Vor- und Nachlaufzeit liegenden Ereignisse ebenfalls aus der Datenbank herausgesucht, in den Ereignis-Tabellen abgespeichert und die gefundenen Ereignisse aufgrund der Daten dieser relevanten Ereignisse klassiert werden.

6. Verfahren nach einem der Ansprüche 4 bis 5, dadurch gekennzeichnet, dass der Ereignis Quality Value für ein Ereignis berechnet wird, indem
a) jeder Signalisierungs-Meldung bzw. Sequenz von Signalisierungs-Meldungen ein Zahlenwert zugeordnet wird,
b) aus den Datensätzen aller gleichklassierten Ereignisse ein Durchschnitts-Datensatz berechnet wird, indem für jeden Protokollparameterwert bzw. für jeden Zahlenwert der Signalisierungs-Meldungen ein Mittelwert berechnet wird,
c) aus den Mittelwerten des Durchschnitts-Datensatzes für jedes Ereignis ein Ereignisvektor gebildet wird und
d) der Ereignisvektor mit einem vorgegebenen ereignisspezifischen Gewichtungsvektor skalar multipliziert wird.

7. Verfahren nach einem der Ansprüche 1 bis 6, dadurch gekennzeichnet, dass der System Quality Value bezüglich einem Gruppierungskriterium berechnet wird, indem ein Modul Quality Vektor, dessen Komponenten die Modul Quality Values der einzelnen Module sind, mit einem Modul-Gewichtungsvektor skalar multipliziert wird, wobei der Modul-Gewichtungsvektor vom Gruppierungskriterium abhängig ist.

8. Verfahren nach einem der Ansprüche 1 bis 7, dadurch gekennzeichnet, dass die System Quality Values grafisch, insbesondere als Histogramm, dargestellt werden.

9. Verfahren nach einem der Ansprüche 3 bis 8, dadurch gekennzeichnet, dass die System Quality Values bezüglich verschiedener Gruppierungskriterien in Bezug zueinander gesetzt werden.

10. Verfahren nach einem der Ansprüche 2 bis 9, dadurch gekennzeichnet, dass als systemexterne Protokollparameter zumindest eine Sprachqualität, eine Dauer zur Erstellung der Testverbindung sowie Ort, Zeit, Geschwindigkeit und Bewegungsrichtung des mobilen Endgerätes erfasst werden.

11. Analyseanordnung zur Durchführung des Verfahrens nach Anspruch 1, dadurch gekennzeichnet, dass die Analyseanordnung ein herkömmliches, öffentliches Mobilfunknetzwerk, zumindest zwei Endgeräte zur Herstellung der Testverbindungen, zumindest eine Messvorrichtung zur Erfassung der Protokollparameterwerte und eine Auswertungsvorrichtung mit einer Datenbank zur Speicherung ausgewählter Protokollparameterwerte als Datensätze und einer Auswertungseinheit zur Auswertung der Datensätze umfasst, wobei die Auswertungseinheit mehrere Module zur Berechnung je eines Modul Quality Values bezüglich einem Beurteilungskriterium als Mittelwert einer Mehrzahl von Ereignis Quality Values, welche je ein Qualitäts-Mass für einen bestimmten Ereignistyp darstellen, sowie Mittel zur Berechnung eines System Quality Values als gewichtete Summe der einzelnen Modul Quality Values aufweist.

12. Auswertungsvorrichtung für eine Analyseanordnung nach Anspruch 11, dadurch gekennzeichnet, dass sie Mittel zum Importieren von erfassten Protokollparameterwerten, Mittel zur Speicherung ausgewählter Protokollparameterwerte als Datensätze sowie eine Auswertungseinheit umfasst, wobei die Auswertungseinheit mehrere Module zur Berechnung je eines Modul Quality Values bezüglich einem Beurteilungskriterium als Mittelwert einer Mehrzahl von Ereignis Quality Values, welche je ein Qualitäts-Mass für einen bestimmten Ereignistyp darstellen, sowie Mittel zur Berechnung eines System Quality Values als gewichtete Summe der einzelnen Modul Quality Values aufweist.
